# EUROPEAN PATENT APPLICATION

(11) **EP 3 985 485 A1**
(43) Date of publication of application: **20.04.2022**
(21) Application number: 20834882.1
(22) Date of filing: 01.06.2020
(51) Int. Cl.: G06F 3/01

(54) **GESTURE RECOGNITION METHOD AND DEVICE, AND COMPUTER-READABLE STORAGE MEDIUM**

(30) Priority: 03.07.2019 CN 201910596336
(71) Applicant: ZTE Corporation, shenzhen Guangdong 518057 (CN)
(72) Inventor: LUAN, Lan, Shenzhen, Guangdong 518057 (CN)
(74) Representative: Betten & Resch
(86) International application number: PCT/CN2020/093807
(87) International publication number: WO 2021/000683

(57) **Abstract**

A gesture recognition method and device, and a computer-readable storage medium. The method comprises: capturing a gesture event and acquiring parameter information of the gesture event (100); implementing the following by means of a desktop application: when it is determined, according to the parameter information of the gesture event, that the gesture event satisfies a requirement of full-screen gesture recognition, performing recognition of a full-screen gesture according to the parameter information of the gesture event, and performing state switching according to the recognized full-screen gesture (101).

## Description

### CROSS-REFERENCE TO RELATED APPLICATION

The present application is based on and claims the priority of Chinese patent application No. 201910596336.1 filed on July 3, 2019, the disclosure of which is incorporated herein by reference in its entirety.

### TECHNICAL FIELD

The embodiments of the present disclosure relate to, but are not limited to, terminal device technology and, in particular, to a gesture recognition method and device and a computer-readable storage medium.

### BACKGROUND

The development of user operation buttons in smart terminal devices has experienced a transition from the manipulation through physical buttons to the maximum utilization of software virtual buttons in the screen. The latest development trend is to use the entire screen as a space where a user can operate by completely abandoning the affordances of buttons that take up space in the screen and directly recognizing the user's gestures to respond to the user's operation. In this way, the software can take full advantage of the size of the mobile phone screen to maximize the display of its interface, thus greatly improving the user experience. There are mainly two related schemes of full-screen gesture recognition. One is implemented directly at the system level, with high processing efficiency, but the interaction with the home is not high, and the incongruousness problem is serious; and the other one is implemented at the application end, where the application itself is more flexible compared to the system-level implementation and can freely implement animations, with higher interaction with users, but it is disconnected from the system and thus cannot recognize gestures once the application is in the inactive state.

### SUMMARY

An embodiment of the present disclosure provides a gesture recognition method and device, which are intended to solve, at least in part, one of the technical problems of the existing technology.

An embodiment of the present disclosure provides a gesture recognition method, including: implementing through a system level: performing capture of a gesture event to obtain parameter information for the gesture event; and implementing through a home application: in response to determining according to the parameter information for the gesture event that the gesture event meets a requirement of full-screen gesture recognition, performing recognition of a full-screen gesture according to the parameter information for the gesture event, and performing state switching according to the recognized full-screen gesture.

An embodiment of the present disclosure provides a gesture recognition device, including: an event capture module configured to implement through a system level: performing capture of a gesture event to obtain parameter information for the gesture event; a gesture recognition module configured to implement through a home application: in response to determining according to the parameter information for the gesture event that the gesture event meets a requirement of full-screen gesture recognition, performing recognition of a full-screen gesture according to the parameter information for the gesture event; and a state switching module configured to implement through the home application: performing state switching according to the recognized full-screen gesture.

An embodiment of the present disclosure provides a gesture recognition device, including a processor and a computer-readable storage medium, where the computer-readable storage medium stores instructions which, when executed by the processor, cause the processor to perform any one of the gesture recognition methods mentioned above.

An embodiment of the present disclosure provides a computer-readable storage medium storing a computer program which, when executed by a processor, causes the processor to perform the steps of any one of the gesture recognition methods mentioned above.

Additional features and advantages of the embodiments of the present disclosure will be set forth in the subsequent description, and in part will become apparent from the description, or may be learned by practice of the embodiments of the present disclosure. The purposes and other advantages of the embodiments of the present disclosure can be realized and obtained by structures particularly noted in the description, the claims and the accompanying drawings.

### BRIEF DESCRIPTION OF DRAWINGS

The accompanying drawings are used to provide a further understanding of the technical schemes of the embodiments of the present disclosure and constitute a part of the description. The accompanying drawings are used to explain the technical schemes of the embodiments of the present disclosure together with the embodiments of the present disclosure, and do not constitute a restriction on the technical schemes of the embodiments of the present disclosure.
Fig. 1 is a flowchart of a gesture recognition method according to an embodiment of the present disclosure;
Fig. 2 is an example flowchart of a gesture recognition process according to an embodiment of the present disclosure;
Fig. 3 is an example flowchart of gesture recognition and state switching by a home gesture consumer according to an embodiment of the present disclosure;
Fig. 4 is an example flowchart of gesture recognition and state switching by a non-home gesture consumer according to an embodiment of the present disclosure;
Fig. 5 is a schematic diagram of the structure of a gesture recognition device according to another embodiment of the present disclosure;
Fig. 6 is an example schematic diagram of a gesture recognition device according to an embodiment of the present disclosure; and
Fig. 7 is a schematic diagram of the hardware structure of a gesture recognition device according to an embodiment of the present disclosure.

### DETAILED DESCRIPTION

The embodiments of the present disclosure will be described in detail below in combination with the accompanying drawings. It should be noted that any combinations of embodiments and features of the embodiments of the present disclosure without conflict are possible.

The steps shown in the flowcharts of the drawings may be performed in a computer system, such as with a set of computer-executable instructions. Moreover, although a logical order is shown in the flowcharts, the steps shown or described may be performed, in some cases, in a different order than shown or described herein.

With the growing popularity of smartphones, there will be more than 2 billion users of smart terminal devices in the world. With such a huge number, the demand of users for differentiation is also increasing day by day. Driven by this trend, a wide variety of personalized and differentiated products are emerging in an overwhelming way. From a rich diversity at the hardware level, for example a wide selection of cell phone styles and colors, to various customized systems and software, etc., all these are intended to meet the differentiated demand of users to the greatest extent. At present, the mainstream smart terminal devices have launched their own full-screen design schemes, which were originally created with the intention of allowing users to operate on the entire screen by completely abandoning the affordances of buttons that take up space in the screen, thus leaving more space for applications and giving the user better visual enjoyment. However, there is still some room for improvement in the consistency and fluency of interaction in the mainstream design schemes.

At present, there are two mainstream schemes of full-screen gesture recognition.

The first scheme is to implement gesture event capture, gesture recognition and state switching directly at the system level. In a full-screen mode, the control of all states is completed directly at the system level. The advantage of this scheme is that it solves problems at the system level and has the advantage of priority in the processing of events, that is, it handles the events in the first time, thus avoiding passing through layers, and is thus the most efficient way. However, the disadvantages of this scheme are also obvious. At the system level, the interaction with various involved applications is poor. Although the final state switching is implemented by the application side, the specific switching process is still controlled by the system level, while the application side can only execute state switching according to the control instructions at the system level. The system level cannot control the changing state of the sub-interfaces in the interface in detail, so the visual effect of the state switching process is relatively rough, which leads to some interaction and scenario designs that intend to optimize the user experience are not easy to implement, and the cost of achieving them is very high. In the process of implementation, the interaction of multiple interfaces and applications greatly increases the overhead, which gradually turns the advantages that this implementation can achieve into disadvantages. In a highly competitive market environment, the ultimate goal of a function is to provide a good user experience and comfortable user scenarios, so this scheme loses its competitiveness, while in contrast, the second implementation is more competitive in the market.

The second scheme is to implement gesture event capture, gesture recognition and state switching at the application side or application end. This scheme is more flexible, for example, it is more flexible in the visual effect design and scenario design stages. However, the full-screen gesture recognition scheme implemented at the application side also suffers from the problem of incongruousness, and although the visual effect interaction process is more excellent, there are defects in system switching, that is, in other applications that are out of application management, gesture events cannot be captured once an application is in an inactive state, and thus the gesture recognition cannot be realized, resulting in gesture recognition failure.

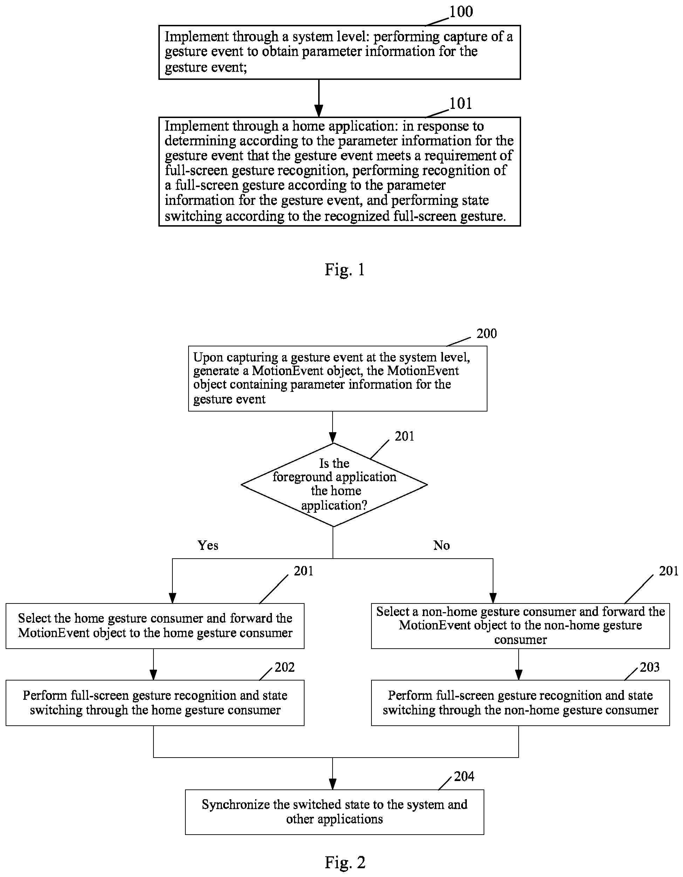

With reference to Fig. 1, an embodiment of the present disclosure proposes a gesture recognition method, including the following steps.

At step 100, the following step is implemented through a system level: performing capture of a gesture event to obtain parameter information for the gesture event.

In an embodiment of the present disclosure, the capture of a gesture event is implemented at the topmost level of the home through a high-level window (i.e., gesture recognition hot zone). This scheme can recognize both full-screen gestures for the home application and full-screen gestures for non-home applications, and will not fail to recognize full-screen gestures because the foreground application is a non-home application.

In an embodiment of the present disclosure, the gesture event can be a touch event or a non-touch event, which is not limited by the embodiments of the present disclosure.

In an embodiment of the present disclosure, the parameter information for the gesture event is contained in a MotionEvent object.

In an embodiment of the present disclosure, the parameter information for the gesture event includes all parameter information for the user's operation on the touch screen, including the position, the occurrence of event, the type of event, finger information for touch occurrence, etc., which are all important parameters for gesture recognition.

In an example embodiment, the position refers to the positions of all the touch points of the gesture event.

In an example embodiment, the occurrence of event refers to whether an event occurs.

In an example embodiment, the type of event refers to whether the event that occurred is a down event, a move event or an up event.

In an example embodiment, the finger information for touch occurrence refers to the number of fingers for the touch occurrence, etc.

At step 101, the following step is implemented through a home application: in response to determining according to the parameter information for the gesture event that the gesture event meets a requirement of full-screen gesture recognition, performing recognition of a full-screen gesture according to the parameter information for the gesture event, and performing state switching according to the recognized full-screen gesture.

In an embodiment of the present disclosure, the full-screen gestures are actions originally defined through the system level, mainly switching to the home application (Home), displaying the recently used application (Recent) and returning to the recently used application (Back).

In an example embodiment, the requirement of full-screen gesture recognition includes: the finger information for touch occurrence is 1, and the movement direction of the gesture event is a preset direction, where the preset direction is a direction such as an up, down, left, or right direction, etc.

In an embodiment of the present disclosure, performing recognition of a full-screen gesture according to the parameter information for the gesture event includes: in response to monitoring that the gesture event needs to be consumed and the gesture event including a down event, a move event and an up event, determining a movement distance and/or a movement speed of the up event relative to the down event according to the parameter information for the up event; and recognizing the full-screen gesture according to the movement distance and/or the movement speed of the up event relative to the down event.

In an example embodiment, it is determined, according to the following conditions, that it is monitored that the gesture event needs to be consumed: the current state is in a normal mode or non-editing mode and the down event occurs in a gesture recognition hot zone.

In an example embodiment, the gesture recognition hot zone refers to a predefined zone, which may be any zone on the screen.

In another embodiment of the present disclosure, in response to a foreground application being a non-home application when the gesture event is captured and further the gesture event being a down event, the method further includes: switching the current state to a state of entering the recent application.

In an embodiment of the present disclosure, recognizing the full-screen gesture according to the movement distance and/or the movement speed of the up event relative to the down event includes at least one of the following: in response to the movement distance being greater than the first preset distance threshold, determining that the gesture is a first gesture, such as a swipe-up gesture; in response to the movement distance being less than or equal to the first preset distance threshold and the movement speed being greater than the preset speed threshold, determining that the gesture is a second gesture, such as a quick swipe-up gesture; or in response to the movement speed being less than or equal to a preset speed threshold, ending this process or reinitializing relevant parameters of gesture recognition, such as the current state of the mobile terminal, the first preset distance threshold, the second preset distance threshold and the preset speed threshold.

Performing state switching according to the recognized gesture includes at least one of the following: in response to the gesture being the first gesture, such as a swipe-up gesture, determining that the current state needs to be switched to the state of entering the recent application, and executing an animation effect of switching from the current state to the state of entering the recent application; or in response to the gesture being the second gesture, such as a quick swipe-up gesture, determining that the current state needs to be switched to the home, executing an animation effect of switching from the current state to the home, and moving a current page of the home to a designated homepage.

In an example embodiment, the first preset distance threshold is related to the current display size (i.e., the number of pixels contained per dp) of the screen and the display orientation of the screen.

In an example embodiment, the position coordinate P_{down} of the down event needs to be recorded.

In another embodiment of the present disclosure, after performing state switching according to the recognized full-screen gesture, the method further includes: reinitializing relevant parameters of gesture recognition, such as the current state of the mobile terminal, the first preset distance threshold, the second preset distance threshold and the preset speed threshold.

In another embodiment of the present disclosure, the method further includes: performing synchronization of the current state.

In another embodiment of the present disclosure, when the gesture event only includes the down event and the move event, performing recognition of a full-screen gesture according to the parameter information for the gesture event further includes: in response to a movement distance of the last captured move event relative to the down event being greater than the first preset distance threshold, determining the sum of movement distances of the last captured n move events according to parameter information for the n move events; and in response to the sum of the movement distances of the n move events being less than the second preset distance threshold, determining that the gesture is a third gesture, such as a pause gesture; and performing state switching according to the recognized gesture includes: in response to the gesture being the third gesture, such as a pause gesture, determining that the current state needs to be switched to the state of entering the recent application, and executing an animation effect of switching from the current state to the state of entering the recent application.

In another embodiment of the present disclosure, when the gesture event only includes the down event and the move event, performing recognition of a full-screen gesture according to the parameter information for the gesture event further includes: in response to a movement speed of the last captured move event relative to the down event being greater than the preset speed threshold, determining that the full-screen gesture is a second gesture; and performing state switching according to the recognized full-screen gesture includes: in response to the full-screen gesture being the second gesture, determining that the current state needs to be switched to the home, executing an animation effect of switching from the current state to the home, and moving a current page of the home to a designated homepage.

In another embodiment of the present disclosure, after performing state switching according to the recognized full-screen gesture, the method further includes: resetting all gesture recognition states.

In another embodiment of the present disclosure, before performing capture of the gesture event to obtain parameter information for the gesture event, the method further includes: performing initialization on an entire system.

Specifically, performing initialization on an entire system includes: in response to the home application being launched, acquiring a current navigation bar type from the system; and in response to the current navigation bar type being a full-screen gesture type, initializing the following parameters: whether the home is currently in the foreground (whether it is visible to the user's naked eye), whether an event distribution pipeline of the system is connected (whether it is connected in a service manner, if not, a connection is requested), whether a module pipeline for internal event distribution is initialized (if there is no need for creation, then initialization parameters are passed), the current state of the mobile terminal, the first preset distance threshold, the second preset distance threshold and the preset speed threshold.

The current state of the mobile terminal includes: a screen size of the mobile terminal, a current landscape or portrait screen state of the mobile terminal, and a gesture recognition hot zone parameter of the mobile terminal.

The current landscape or portrait screen state of the mobile terminal includes: a landscape screen state or a portrait screen state.

The gesture recognition hot zone of the mobile terminal refers to a rectangular space defined in association with the size of the mobile terminal plus the landscape or portrait screen state of the screen.

In another embodiment of the present disclosure, performing initialization on an entire system further includes: registering a monitoring object, listening through the monitoring object to determine whether the navigation bar type is switched, and in response to monitoring that the navigation bar type is switched, re-executing the step of acquiring the current navigation bar type from the system.

According to an embodiment of the present disclosure, at the home application, a first starting point of user operation, the user's operation is planned and designed in a unified manner, and the recognition and state switching of full-screen gestures are placed at the application end, which allows more space for the design of visual effects on each page, so that more visual effects and interaction scenarios that are more in line with the user's operation can be designed, and can interact with the system level, through which other visual effects resources are controlled at the system level to coordinate in full-screen gesture recognition and state switching in order to avoid incongruousness.

In an example embodiment, as shown in Fig. 2, the gesture recognition process includes the following steps.

At step 200, upon capturing a gesture event at the system level, a MotionEvent object is generated, the MotionEvent object containing parameter information for the gesture event.

In this step, the parameter information for the gesture event includes all parameter information for the user's operation on the touch screen, including the position, the occurrence of event, the type of event, finger information for touch occurrence, etc., which are all important parameters for gesture recognition.

In an example embodiment, the position refers to the positions of all the touch points of the gesture event.

In an example embodiment, the occurrence of event refers to whether an event occurs.

In an example embodiment, the type of event refers to whether the event that occurred is a down event, a move event or an up event.

In an example embodiment, the finger information for touch occurrence refers to the number of fingers for the touch occurrence, etc.

At step 201, in response to the requirement of full-screen gesture recognition being met, a gesture event consumer is selected according to a current operation scenario, and the MotionEvent object is forwarded to the selected gesture event consumer. Specifically, in response to a current operation scenario where the foreground application is the home application, a home gesture consumer is selected, the MotionEvent object is forwarded to the home gesture consumer, and the process proceeds to step 202 and step 204. Specifically, in response to a current operation scenario where the foreground application is a non-home application, a non-home gesture consumer is selected, the MotionEvent object is forwarded to the non-home gesture consumer, and the process proceeds to step 203 and step 204.

In an example embodiment, the operation scenario includes at least one of the following: recognizing a full-screen gesture when the home application is in the foreground, that is, recognizing a full-screen gesture on the home; or recognizing a full-screen gesture when a non-home application is in the foreground, that is, the user has opened a non-home application and this non-home application is in an active state.

At step 202, full-screen gesture recognition and state switching are performed through the home gesture consumer.

At step 203, full-screen gesture recognition and state switching are performed through the non-home gesture consumer.

At step 204, state synchronization is performed. Specifically, the switched state is synchronized to the system and other applications.

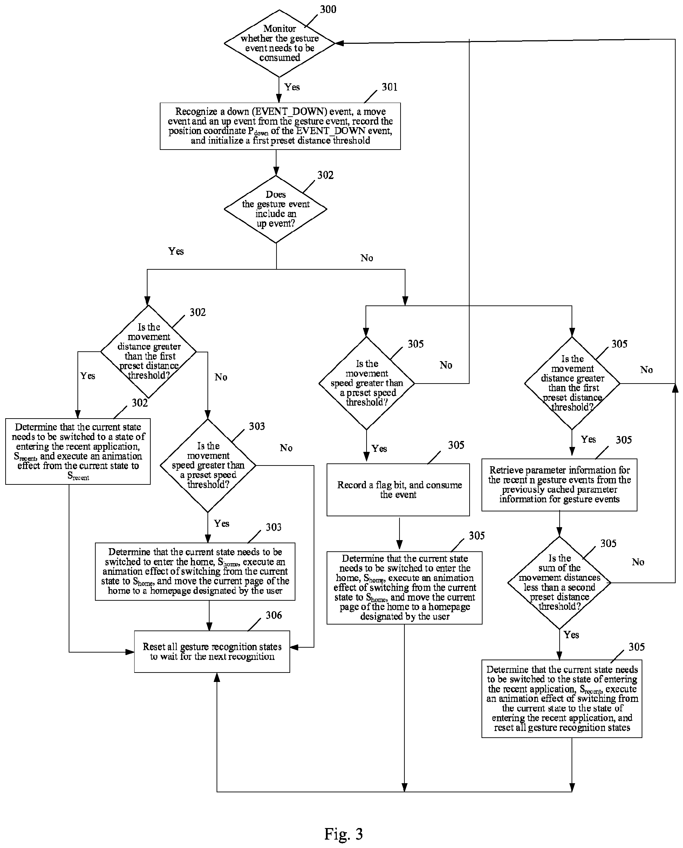

In an example embodiment, as shown in Fig. 3, the process of performing full-screen gesture recognition and state switching through the home gesture consumer includes the following steps.

At step 300, it is monitored whether the gesture event needs to be consumed. Monitoring rules include: whether the current state allows execution of the full-screen gesture, that is, whether the home is in a normal mode (or non-editing mode); and whether the down event occurs in a gesture recognition hot zone.

In this step, the gesture recognition hot zone refers to a predefined zone, which can be any zone on the screen.

At step 301, when it is monitored that the gesture event needs to be consumed, it is necessary to first recognize a down (EVENT_DOWN) event, a move event and an up event from the gesture event, record the position coordinate P_{down} of the EVENT_DOWN event, and initialize the first preset distance threshold, where the first preset distance threshold is defined as Tslide.

In this step, the first preset distance threshold is related to the current display size (that is, the number of pixels contained per dp) and the current display orientation of the screen.

At step 302, in response to the gesture events including a down event, a move event and an up event, it is determined whether the movement distance of the up event relative to the down event is greater than the first preset distance threshold. In response to the movement distance being greater than the first preset distance threshold, it is determined that the current state needs to be switched to a state of entering the recent application, S_{recent}, and an animation effect from the current state to the S_{recent} is executed; and in response to the movement distance being less than or equal to the first preset distance threshold, the process proceeds to step 303.

At step 303, it is determined whether the movement speed of the up event relative to the down event is greater than the preset speed threshold. In response to the movement speed being greater than the preset speed threshold, it is determined that the current state needs to be switched to the home, Shome, an animation effect of switching from the current state to Shome is executed, and the current page of the home is moved to a homepage designated by the user; and in response to the movement speed being less than or equal to the preset speed threshold, the process proceeds to step 306.

At step 304, when the gesture event only includes the down event and the move event, which means that the user's action is still going on, that is, no up (EVENT_UP) event is captured, i.e., the user has not lifted his/her hand by this moment, it is necessary to perform further recognition of the subsequent events. The specific recognition step includes step 305.

At step 305, when the movement distance of the last move event relative to the down event is greater than the first preset distance threshold, the above determination conditions cannot be processed, and it is necessary to retrieve parameter information for the recent n gesture events from the previously cached parameter information for gesture events, and monitor whether the sum D_{ad} of the movement distances of the n gesture events is less than the second preset distance threshold, and when the sum D_{ad} of the movement distances of the n gesture events is less than the second preset distance threshold, it is determined that the current state needs to be switched to the state of entering the recent application, S_{recent}, an animation effect of switching from the current state to the state of entering the recent application is performed, and all the gesture recognition states are reset without waiting for the EVENT_UP event; and in response to the sum of the movement distances of the n gesture events being greater than or equal to the second preset distance threshold, the process returns to step 300 to continue execution.

In response to the movement distance of the last gesture event relative to the down event being less than or equal to the first preset distance threshold, or the movement speed of the last move event relative to the down event being less than or equal to the preset speed threshold, the process returns to step 300 to continue to listen for the move (EVENT_MOVE) or the EVENT_UP event.

In response to the movement speed of the last move event relative to the down event being greater than the preset speed threshold, a flag bit is recorded and the event is consumed; and in response to the flag bit being T, it is determined that the current state needs to be switched to the home, Shome, the animation effect of switching from the current state to Shome is executed, and the current page of the home is moved to the homepage designated by the user.

At step 306, all gesture recognition states are reset to wait for the next recognition.

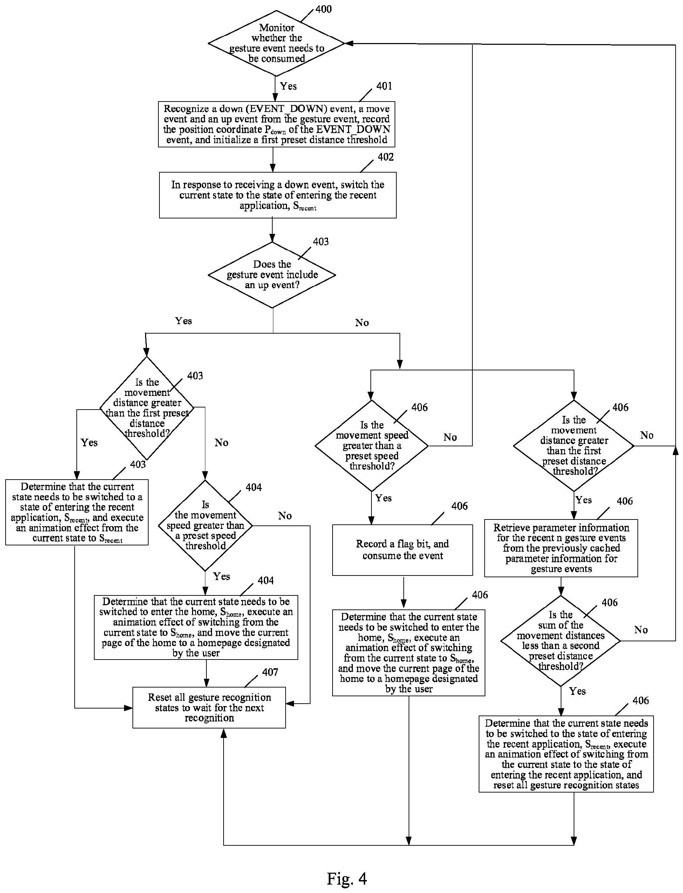

In an example embodiment, as shown in Fig. 4, the process of performing full-screen gesture recognition and state switching through a non-home gesture consumer includes the following steps.

At step 400, it is monitored whether the gesture event needs to be consumed. Monitoring rules include: whether the current state allows execution of the full-screen gesture, that is, whether the home is in a normal mode (or non-editing mode); and whether the down event occurs in a gesture recognition hot zone; and whether the foreground application is a non-home application.

In this step, the gesture recognition hot zone refers to a predefined zone, which can be any zone on the screen.

At step 401, when it is monitored that the gesture event needs to be consumed, it is necessary to first recognize a down (EVENT_DOWN) event, a move event and an up event from the gesture event, record the position coordinate P_{down} of the EVENT_DOWN event, and initialize the first preset distance threshold, where the first preset distance threshold is defined as Tslide.

In this step, the first preset distance threshold is related to the current display size (that is, the number of pixels contained per dp) and the current display orientation of the screen.

At step 402, in response to receiving a down event, the current state is switched to a state of entering the recent application, S_{recent}.

At step 403, in response to the gesture events including a down event, a move event and an up event, it is determined whether the movement distance of the up event relative to the down event is greater than the first preset distance threshold. In response to the movement distance being greater than the first preset distance threshold, it is determined that the current state needs to be switched to a state of entering the recent application, S_{recent}, and an animation effect from the current state to the S_{recent} is executed; and in response to the movement distance being less than or equal to the first preset distance threshold, the process proceeds to step 404.

At step 404, it is determined whether the movement speed of the up event relative to the down event is greater than the preset speed threshold. In response to the movement speed being greater than the preset speed threshold, it is determined that the current state needs to be switched to the home, Shome, an animation effect of switching from the current state to Shome is executed, and the current page of the home is moved to a homepage designated by the user; and in response to the movement speed being less than or equal to the preset speed threshold, the process proceeds to step 407.

At step 405, when the gesture event only includes the down event and the move event, which means that the user's action is still going on, that is, no up (EVENT_UP) event is captured, i.e., the user has not lifted his/her hand by this moment, it is necessary to perform further recognition of the subsequent events. The specific recognition step includes step 406.

At step 406, when the movement distance of the last move event relative to the down event is greater than the first preset distance threshold, the above determination conditions cannot be processed, and it is necessary to retrieve parameter information for the recent n gesture events from the previously cached parameter information for gesture events, and monitor whether the sum D_{ad} of the movement distances of the n gesture events is less than the second preset distance threshold, and when the sum D_{ad} of the movement distances of the n gesture events is less than the second preset distance threshold, it is determined that the current state needs to be switched to the state of entering the recent application, S_{recent}, an animation effect of switching from the current state to the state of entering the recent application is performed, and all the gesture recognition states are reset without waiting for the EVENT_UP event; and in response to the sum of the movement distances of the n gesture events being greater than or equal to the second preset distance threshold, the process returns to step 400 to continue execution.

In response to the movement distance of the last gesture event relative to the down event being less than or equal to the first preset distance threshold, or the movement speed of the last move event relative to the down event being less than or equal to the preset speed threshold, the process returns to step 400 to continue to listen for the move (EVENT_MOVE) or the EVENT_UP event.

In response to the movement speed of the last move event relative to the down event being greater than the preset speed threshold, a flag bit is recorded and the event is consumed; and in response to the flag bit being T, it is determined that the current state needs to be switched to the home, Shome, the animation effect of switching from the current state to Shome is executed, and the current page of the home is moved to the homepage designated by the user.

At step 407, all gesture recognition states are reset to wait for the next recognition.

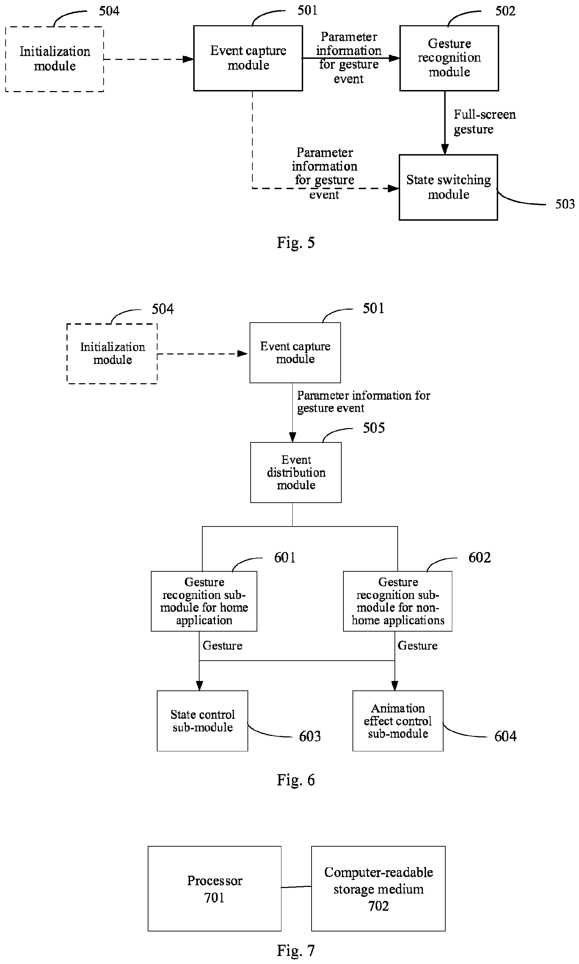

With reference to Fig. 7, another embodiment of the present disclosure proposes a gesture recognition device, including a processor 701 and a computer-readable storage medium 702, where the computer-readable storage medium 702 stores instructions which, when executed by the processor 701, cause the processor 701 to perform any one of the gesture recognition methods mentioned above.

Another embodiment of the present disclosure proposes a computer-readable storage medium storing a computer program which, when executed by a processor, causes the processor to perform the steps of any one of the gesture recognition methods mentioned above.

With reference to Fig. 5, another embodiment of the present disclosure proposes a gesture recognition device, including the following modules.

An event capture module 501 is configured to implement through a system level: performing capture of a gesture event to obtain parameter information for the gesture event;
A gesture recognition module 502 is configured to implement through a home application: in response to determining according to the parameter information for the gesture event that the gesture event meets a requirement of full-screen gesture recognition, performing recognition of a full-screen gesture according to the parameter information for the gesture event; and
A state switching module 503 is configured to implement through the home application: performing state switching according to the recognized full-screen gesture.

In an embodiment of the present disclosure, the capture of a gesture event is implemented at the topmost level of the home through a high-level window (i.e., gesture recognition hot zone). This scheme can recognize both full-screen gestures for the home application and full-screen gestures for non-home applications, and will not fail to recognize full-screen gestures because the foreground application is a non-home application.

In an embodiment of the present disclosure, the gesture event can be a touch event or a non-touch event, which is not limited by the embodiments of the present disclosure.

In an embodiment of the present disclosure, the parameter information for the gesture event is contained in a MotionEvent object.

In an embodiment of the present disclosure, the parameter information for the gesture event includes all parameter information for the user's operation on the touch screen, including the position, the occurrence of event, the type of event, finger information for touch occurrence, etc., which are all important parameters for gesture recognition.

In an example embodiment, the position refers to the positions of all the touch points of the gesture event.

In an example embodiment, the occurrence of event refers to whether an event occurs.

In an example embodiment, the type of event refers to whether the event that occurred is a down event, a move event or an up event.

In an example embodiment, the finger information for touch occurrence refers to the number of fingers for the touch occurrence, etc.

In an embodiment of the present disclosure, the full-screen gestures are actions originally defined through the system level, mainly switching to the home application (Home), displaying the recently used application (Recent) and returning to the recently used application (Back).

In an example embodiment, the requirement of full-screen gesture recognition includes: the finger information for touch occurrence is 1, and the movement direction of the gesture event is a preset direction, where the preset direction is a direction such as an up, down, left, or right direction, etc.

In an embodiment of the present disclosure, the gesture recognition module 502 is specifically configured to perform recognition of a full-screen gesture according to the parameter information for the gesture event in the following ways: in response to monitoring that the gesture event needs to be consumed and the gesture event including a down event, a move event and an up event, determining a movement distance and/or a movement speed of the up event relative to the down event according to the parameter information for the up event; and recognizing the full-screen gesture according to the movement distance and/or the movement speed of the up event relative to the down event.

In an example embodiment, the gesture recognition module 502 is specifically configured to determine, according to the following conditions, that it is monitored that the gesture event needs to be consumed: the current state is in a normal mode or non-editing mode and the down event occurs in a gesture recognition hot zone.

In an example embodiment, the gesture recognition hot zone refers to a predefined zone, which can be any zone on the screen.

In another embodiment of the present disclosure, the state switching module 503 is further configured to: in response to a foreground application being a non-home application when the gesture event is captured and the gesture event being a down event, switch the current state to a state of entering the recent application.

In an embodiment of the present disclosure, the gesture recognition module 502 is specifically configured to recognize the full-screen gesture according to the movement distance and/or the movement speed of the up event relative to the down event in at least one of the following ways: in response to the movement distance being greater than the first preset distance threshold, determining that the gesture is a first gesture, such as a swipe-up gesture; in response to the movement distance being less than or equal to the first preset distance threshold and the movement speed being greater than the preset speed threshold, determining that the gesture is a second gesture, such as a quick swipe-up gesture; or in response to the movement speed being less than or equal to a preset speed threshold, ending this process or reinitializing relevant parameters of gesture recognition, such as the current state of the mobile terminal, the first preset distance threshold, the second preset distance threshold and the preset speed threshold.

The state switching module 503 is specifically configured to perform state switching according to the recognized full-screen gesture in at least one of the following ways: in response to the gesture being the first gesture, such as a swipe-up gesture, determining that the current state needs to be switched to the state of entering the recent application, and executing an animation effect of switching from the current state to the state of entering the recent application; or in response to the gesture being the second gesture, such as a quick swipe-up gesture, determining that the current state needs to be switched to the home, executing an animation effect of switching from the current state to the home, and moving a current page of the home to a designated homepage.

In an example embodiment, the first preset distance threshold is related to the current display size (i.e., the number of pixels contained per dp) of the screen and the display orientation of the screen.

In an example embodiment, the position coordinate P_{down} of the down event needs to be recorded.

In another embodiment of the present disclosure, the initialization module 504 is further configured to: after performing state switching according to the recognized full-screen gesture, reinitialize relevant parameters of gesture recognition, such as the current state of the mobile terminal, the first preset distance threshold, the second preset distance threshold and the preset speed threshold.

In another embodiment of the present disclosure, the state switching module 503 is further configured to: perform synchronization of the current state.

In another embodiment of the present disclosure, the gesture recognition module 502 is further configured to: when the gesture event only includes the down event and the move event, in response to the movement distance of the last captured move event relative to the down event being greater than the first preset distance threshold, determine the sum of movement distances of the last captured n move events according to parameter information for the n move events; and in response to the sum of the movement distances of the n move events being less than the second preset distance threshold, determine that the gesture is a third gesture, such as a pause gesture.

The state switching module 503 is further configured to: in response to the gesture being the third gesture, such as a pause gesture, determine that the current state needs to be switched to the state of entering the recent application, and execute an animation effect of switching from the current state to the state of entering the recent application.

In another embodiment of the present disclosure, the gesture recognition module 502 is further configured to: when the gesture event only includes the down event and the move event, in response to the movement speed of the last captured move event relative to the down event being greater than the preset speed threshold, determine that the full-screen gesture is a second gesture.

Performing state switching according to the recognized full-screen gesture includes: in response to the full-screen gesture being the second gesture, determining that the current state needs to be switched to the home, executing an animation effect of switching from the current state to the home, and moving a current page of the home to a designated homepage.

In another embodiment of the present disclosure, the gesture recognition device further includes: an initialization module 504 configured to perform initialization on an entire system.

Specifically, the initialization module 504 is specifically configured to: in response to the home application being launched, acquire a current navigation bar type from the system; and in response to the current navigation bar type being a full-screen gesture type, initialize the following parameters: whether the home is currently in the foreground (whether it is visible to the user's naked eye), whether an event distribution pipeline of the system is connected (whether it is connected in a service manner, if not, a connection is requested), whether a module pipeline for internal event distribution is initialized (if there is no need for creation, then initialization parameters are passed), the current state of the mobile terminal, the first preset distance threshold, the second preset distance threshold and the preset speed threshold.

The current state of the mobile terminal includes: a screen size of the mobile terminal, a current landscape or portrait screen state of the mobile terminal, and a gesture recognition hot zone parameter of the mobile terminal.

The current landscape or portrait screen state of the mobile terminal includes: a landscape screen state or a portrait screen state.

The gesture recognition hot zone of the mobile terminal refers to a rectangular space defined in association with the size of the mobile terminal plus the landscape or portrait screen state of the screen.

In another embodiment of the present disclosure, the initialization module 504 is further configured to: register a monitoring object, listen through the monitoring object to determine whether the navigation bar type is switched, and in response to monitoring that the navigation bar type is switched, re-execute the step of acquiring the current navigation bar type from the system.

According to an embodiment of the present disclosure, at the home application, a first starting point of user operation, the user's operation is planned and designed in a unified manner, and the recognition and state switching of full-screen gestures are placed at the application end, which allows more space for the design of visual effects on each page, so that more visual effects and interaction scenarios that are more in line with the user's operation can be designed, and can interact with the system level, through which other visual effects resources are controlled at the system level to coordinate in full-screen gesture recognition and state switching in order to avoid incongruousness.

In an example embodiment, as shown in Fig. 6, the gesture recognition device further includes an event distribution module 505, which is configured to recognize a current operation scenario and distribute the parameter information for the gesture event to either a gesture recognition sub-module 601 for the home application or a gesture recognition sub-module 602 for non-home applications according to the current operation scenario.

Specifically, in response to a current operation scenario where a full-screen gesture is recognized when the home application is in the foreground, the parameter information for the gesture event is distributed to the gesture recognition sub-module 601 for the home application; and in response to a current operation scenario where a full-screen gesture is recognized when a non-home application is in the foreground, the parameter information for the gesture event is distributed to the gesture recognition sub-module 602 for non-home applications.

The gesture recognition module 502 includes the gesture recognition sub-module 601 for the home application and the gesture recognition sub-module 602 for non-home applications.

The gesture recognition sub-module 601 for the home application is configured to perform full-screen gesture recognition of a gesture event captured when the home application is in the foreground.

The gesture recognition sub-module 602 for non-home applications is configured to perform full-screen gesture recognition of a gesture event captured when a non-home application is in the foreground.

The state switching module 503 includes a state control sub-module 603 and an animation effect control sub-module 604.

The state control sub-module 603 is configured to perform state switching and state synchronization according to the result of gesture recognition of the gesture recognition sub-module 601 for the home application or the gesture recognition sub-module 602 for non-home applications.

The animation effect control sub-module 604 is configured to control the animation effect in the process of state switching.

An embodiment of the present disclosure includes: implementing through a system level: performing capture of a gesture event to obtain parameter information for the gesture event; and implementing through a home application: in response to determining according to the parameter information for the gesture event that the gesture event meets a requirement of full-screen gesture recognition, performing recognition of a full-screen gesture according to the parameter information for the gesture event, and performing state switching according to the recognized full-screen gesture. According to an embodiment of the present disclosure, at the home application, a first starting point of user operation, the user's operation is planned and designed in a unified manner, and the recognition and state switching of full-screen gestures are placed at the application end, which allows more space for the design of visual effects on each page, so that more visual effects and interaction scenarios that are more in line with the user's operation can be designed, and can interact with the system level, through which other visual effects resources are controlled at the system level to coordinate in full-screen gesture recognition and state switching in order to avoid incongruousness.

In another embodiment, recognizing the full-screen gesture according to the movement distance and/or the movement speed of the move event relative to the down event includes at least one of the following: in response to a foreground application being the home application when the gesture event is captured, recognizing the full-screen gesture for the home application according to the movement distance and/or the movement speed of the move event relative to the down event; or in response to a foreground application being a non-home application when the gesture event is captured, recognizing the full-screen gesture for the non-home application according to the movement distance and/or the movement speed of the move event relative to the down event. This scheme can recognize both full-screen gestures for the home application and full-screen gestures for non-home applications, and will not fail to recognize full-screen gestures because the foreground application is a non-home application.

It can be understood by those having ordinary skills in the art that all or some of the steps of the methods, systems and functional modules/units in the devices disclosed above can be implemented as software, firmware, hardware and appropriate combinations thereof. In the hardware implementation, the division between functional modules/units mentioned in the above description does not necessarily correspond to the division of physical components; for example, a physical component may have multiple functions, or a function or step may be performed cooperatively by several physical components. Some or all of the components may be implemented as software executed by a processor, such as a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As well known to those of ordinary skill in the art, the term computer storage medium includes volatile and nonvolatile, removable and non-removable media implemented in any method or technology for storing information, such as computer-readable instructions, data structures, program modules or other data. A computer storage medium includes, but is not limited to, RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those of ordinary skill in the art that communication media typically contain computer readable instructions, data structures, program modules or other data in a modulated data signal such as a carrier wave or other transmission mechanism, and can include any information delivery media.

The implementations disclosed in the embodiments of the present disclosure are described above, these implementations are only for facilitating understanding of the embodiments of the present disclosure and are not used for limiting the embodiments of the present disclosure. Those having ordinary skills in the art can make any modification and change in the implementations and details without departing from the principal and scope of the embodiments of the present disclosure, but the scope of protection of the embodiments of the present disclosure shall still be subject to the scope defined by the appended claims.

## Claims

1. A gesture recognition method, comprising:
implementing through a system level: performing capture of a gesture event to obtain parameter information for the gesture event; and
implementing through a home application: in response to determining according to the parameter information for the gesture event that the gesture event meets a requirement of full-screen gesture recognition, performing recognition of a full-screen gesture according to the parameter information for the gesture event, and performing state switching according to the recognized full-screen gesture.

2. The method of claim 1, before performing capture of a gesture event to obtain parameter information for the gesture event, further comprising: performing initialization on an entire system.

3. The method of claim 2, wherein performing initialization on an entire system comprises:
in response to the home application being launched, acquiring a current navigation bar type from the system; and
in response to the current navigation bar type being a full-screen gesture type, initializing the following parameters: whether the home is currently in the foreground, whether an event distribution pipeline of the system is connected, whether a module pipeline for internal event distribution is initialized, a current state of a mobile terminal, a first preset distance threshold, a second preset distance threshold and a preset speed threshold;
the current state of the mobile terminal comprising: a screen size of the mobile terminal, a current landscape or portrait screen state of the mobile terminal, and a gesture recognition hot zone parameter of the mobile terminal.

4. The method of claim 3, wherein performing initialization on an entire system further comprises:
registering a monitoring object, listening through the monitoring object to determine whether the navigation bar type is switched, and in response to monitoring that the navigation bar type is switched, re-executing the step of acquiring the current navigation bar type from the system.

5. The method of any one of claims 1 to 4, wherein performing recognition of a full-screen gesture according to the parameter information for the gesture event comprises:
in response to monitoring that the gesture event needs to be consumed and the gesture event comprising a down event, a move event and an up event, determining a movement distance and/or a movement speed of the up event relative to the down event according to the parameter information for the up event; and recognizing the full-screen gesture according to the movement distance and/or the movement speed of the up event relative to the down event.

6. The method of claim 5, further comprising:
monitoring that the gesture event needs to be consumed, in response to the current state being in a normal mode or non-editing mode, and the down event occurs in a gesture recognition hot zone.

7. The method of claim 5, further comprising:
in response to a foreground application being a non-home application when the gesture event is captured and the gesture event being a down event, switching the current state to a state of entering the recent application.

8. The method of claim 5, wherein recognizing the full-screen gesture according to the movement distance and/or the movement speed of the up event relative to the down event comprises at least one of the following:
in response to the movement distance being greater than the first preset distance threshold, determining that the full-screen gesture is a first gesture; or
in response to the movement distance being less than or equal to the first preset distance threshold and the movement speed being greater than the preset speed threshold, determining that the full-screen gesture is a second gesture; and
performing state switching according to the recognized full-screen gesture comprises at least one of:
in response to the full-screen gesture being the first gesture, determining that the current state needs to be switched to a state of entering the recent application, and executing an animation effect of switching from the current state to the state of entering the recent application; or
in response to the full-screen gesture being the second gesture, determining that the current state needs to be switched to the home, executing an animation effect of switching from the current state to the home, and moving a current page of the home to a designated homepage.

9. The method of claim 5, wherein when the gesture event only comprises the down event and the move event, performing recognition of a full-screen gesture according to the parameter information for the gesture event further comprises:
in response to a movement distance of the last captured move event relative to the down event being greater than the first preset distance threshold, determining the sum of movement distances of the last captured n move events according to parameter information for the n move events; and
in response to the sum of the movement distances of the n move events being less than the second preset distance threshold, determining that the full-screen gesture is a third gesture; and
performing state switching according to the recognized gesture comprises:
in response to the full-screen gesture being the third gesture, determining that the current state needs to be switched to a state of entering the recent application, and executing an animation effect of switching from the current state to the state of entering the recent application.

10. The method of claim 5, wherein when the gesture event only comprises the down event and the move event, performing recognition of a full-screen gesture according to the parameter information for the gesture event further comprises:
in response to a movement speed of the last captured move event relative to the down event being greater than the preset speed threshold, determining that the full-screen gesture is a second gesture; and
performing state switching according to the recognized full-screen gesture comprises:
in response to the full-screen gesture being the second gesture, determining that the current state needs to be switched to the home, executing an animation effect of switching from the current state to the home, and moving a current page of the home to a designated homepage.

11. A gesture recognition device, comprising:
an event capture module configured to implement through a system level: performing capture of a gesture event to obtain parameter information for the gesture event;
a gesture recognition module configured to implement through a home application: in response to determining according to the parameter information for the gesture event that the gesture event meets a requirement of full-screen gesture recognition, performing recognition of a full-screen gesture according to the parameter information for the gesture event; and
a state switching module configured to implement through the home application: performing state switching according to the recognized full-screen gesture.

12. A gesture recognition device, comprising a processor and a computer-readable storage medium storing instructions which, when executed by the processor, cause the processor to perform the gesture recognition method of any one of claims 1 to 10.

13. A computer-readable storage medium storing a computer program which, when executed by a processor, causes the processor to perform the steps of the gesture recognition method of any one of claims 1 to 10.
